# EUROPÄISCHE PATENTANMELDUNG

(11) **EP 1 246 331 A2**
(43) Veröffentlichungstag der Anmeldung: **02.10.2002**
(21) Anmeldenummer: 01110106.0
(22) Anmeldetag: 02.05.2001
(51) Int. Cl.: H02B 1/052

(54) **Vorrichtung zur lösbaren Schnellbefestigung von Verteilereinbaugeräten auf Hutschienen**

(30) Priorität: 29.03.2001 DE 10115438
(71) Anmelder: Heinrich Kopp AG, D-63796 Kahl (DE)
(72) Erfinder: Beinenz, Konrad, 63829 Krombach (DE)
(74) Vertreter: Reinhard - Skuhra - Weise & Partner

(57) **Zusammenfassung**

Eine Vorrichtung zur lösbaren Schnellbefestigung eines Gehäuses 11 eines elektrischen Verteilereinbaugerätes an einer Hutschiene 12 besteht aus einem Befestigungselement 10, das an der Gehäuserückseite zwischen einer Ansetz- bzw. Entnahmestellung und einer an der Hutschiene 12 vorgesehenen Befestigungsstellung verschiebbar ist, wobei das Befestigungselement 10 Halteanformungen 18, 19 für das Übergreifen eines Befestigungsabschnitts 20 der Hutschiene 12 und wenigstens eine elastische Rastanformung 23 für die Sicherung der Befestigungsstellung aufweist, und wobei für jede elastische Rastanformung 23 eine Rastausnehmung 26 in dem Bereich zwischen Ansetzstellung und Befestigungsstellung des Befestigungselements 10 vorgesehen ist.

## Beschreibung

Die Erfindung betrifft eine Vorrichtung zur lösbaren Schnellbefestigung eines Gehäuses für ein elektrisches Verteilereinbaugerät an einer Hutschiene.

Bei elektrischen Installationen ist es üblich, elektrische Verteilereinbaugeräte in Schaltschränken an Hutschienen anzumontieren. Hierzu weisen die Gehäuse der Einbaugeräte rückseitige standardisierte Montageabschnitte auf und können nebeneinander in einem sogenannten Sammelschienenverbund an einer Hutschiene montiert werden. Da es sich bei derartigen Verteilereinbaugeräten überwiegend um Sicherungsautomaten und dergleichen handelt, die in Großserie hergestellt werden, besteht ein Bedarf nach einer Vorrichtung zur lösbaren Schnellbefestigung der Gehäuse derartiger elektrischer Verteilereinbaugeräte an Hutschienen, die teilearm und funktionssicher in kleiner Baugröße verwirklicht werden können.

Aus der WO 00/11768 ist bereits ein Installationsgerät zur Montage an einer Hutschiene in Form eines Schiebers bekannt, der zwischen einer Ansetz- und einer Befestigungsstellung der Hutschiene verschiebbar ist. Dieser Schieber ist zur Sicherung der Befestigungsstellung mit einem zusätzlichen laschenförmigen Klemmelement versehen, das am Gehäuse derart gehalten ist, dass es vom Schieber bei seiner Verschiebung in die Raststellung zumindest teilweise übergreifbar und hierdurch in eine die Hutschiene stabil fixierende Position bewegbar ist. Das laschenförmige Klemmelement ist in Form eines metallischen Bestandteils mit Federzunge als separates Teil ausgebildet und für die Funktion der Befestigungsvorrichtung auf Grund der vorgesehenen Befestigungskonzeption unerlässlich. Auf Grund des Vorsehens dieses Klemmelements sind sowohl an dem Schieber als auch an dem Gehäuse zusätzliche Halte- und Aufnahmean- und Einformungen erforderlich, die, abgesehen von der zusätzlichen Herstellung und Montage des Klemmelements selbst, den Herstellungsaufwand aufwendig gestalten.

Der Erfindung liegt demgemäß die Aufgabe zugrunde, eine Vorrichtung zur lösbaren Schnellbefestigung des Gehäuses eines elektrischen Verteilereinbaugerätes an einer Hutschiene verfügbar zu machen, die ohne ein separates Klemmelement auskommt.

Erfindungsgemäß wird diese Aufgabe durch die im Anspruch 1 genannten Merkmale gelöst.

Bevorzugte Merkmale, die die Erfindung vorteilhaft weiterbilden, sind in den nachfolgenden Patentansprüchen angegeben.

Demgemäß macht die Erfindung eine Vorrichtung zu lösbaren Schnellbefestigung eines Gehäuses eines elektrischen Verteilereinbaugerätes an einer Hutschiene verfügbar, da es aus einem Befestigungselement besteht, das an der Gehäuserückseite zwischen einer Ansetz- bzw. Entnahmestellung und einer Befestigungsstellung an der Hutschiene verschiebbar ist, wobei das Befestigungselement Halteanformung für das Übergreifen eines Befestigungsabschnitts der Hutschiene und wenigstens eine elastische Rastanformung für die Sicherung der Befestigungsstellung aufweist.

Aufgrund dieser Konzeption wird vorteilhaft die lösbare Schnellbefestigung mit nur einem Bauteil verwirklicht, das den umgebenden Raum des Verteilereinbaugerätes nicht einengt und sicher und zuverlässig arbeitet.

Gemäß einer bevorzugten Ausgestaltung der Erfindung ist für jede elastische Rastanformung eine Rastausnehmung in dem Bereich zwischen Ansetzstellung und Befestigungsstellung des Befestigungselements vorgesehen, wobei die elastische Rastanformung bevorzugt einen Anlageabschnitt für die Hutschienenkante im Befestigungsbereich aufweist. Der Anlageabschnitt besitzt eine Rastnase für das Hintergreifen der Hutschienenkante nach Eingriff der Rastanformung in die Rastausnehmung. Hierdurch wird vorteilhaft ein sicherer Sitz des Verteilereinbaugerätes an der Hutschiene gewährleistet.

Gemäß einer weiteren Ausgestaltung der Erfindung ist die elastische Rastanformung mittig zwischen zwei Halteanformungen am Eingriffsende eines mit Schieber ausgebildeten Befestigungselements angeordnet, der an einer gehäuseseitigen Führung gelagert ist.

Alternativ können auch elastische Rastanformungen im Bereich von gehäuseseitigen Führungen des als Schieber ausgebildeten Befestigungselements zum Eingriff in dort komplementär angeordnete Rastausnehmungen vorgesehen sein. In beiden Fällen können die vorgesehenen elastischen Rastanformungen auch zur Sicherung der Ansetz- bzw. Entnahmestellung, bzw. zur Begrenzung der Schiebebewegung an der Ansetz- bzw. Entnahmestellung zu funktionellen Vereinbarung dienen.

Gemäß einer weiteren bevorzugten Ausgestaltung der Erfindung sind die Halteanformungen an dem Befestigungselement seitlich angeordnet und vorzugsweise für das anliegende Übergreifen des Befestigungsabschnitts am Hutprofil vorgesehen.

Nachfolgend wird die Erfindung unter Bezugnahme auf die beigefügten Zeichnungen näher erläutert. Es zeigen:
Fig. 1 eine vergrößerte perspektivische Ausschnittsdarstellung der Befestigung eines elektrischen Verteilereinbaugerätes an einer Hutschiene mit einer Vorrichtung gemäß der Erfindung;
Fig. 2 eine perspektivische Ansicht der Zuordnung von Gehäuserückseite, Hutschiene und Befestigungsvorrichtung, bei der die Befestigungsvorrichtung in ihrer Ansetz- bzw. Entnahmestellung angeordnet ist; und
Fig. 3 einen vertikalen Teilausschnitt im Bereich des Eingriffs der elastischen Rastanformung in die Rastausnehmung gemäß Fig.1.

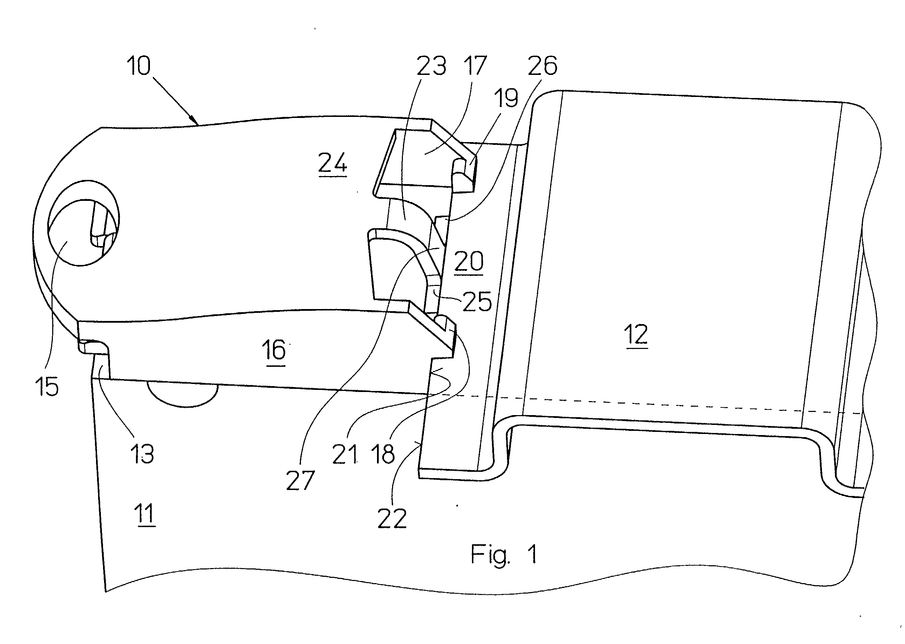

In Fig. 1 ist ein Ausführungsbeispiel einer erfindungsgemäßen Vorrichtung 10 zur lösbaren Schnellbefestigung eines Gehäuses 11 eines elektrischen Verteilereinbaugerätes an einer Hutschiene 12 dargestellt, wobei sich die Vorrichtung in ihrer Befestigungsstellung befindet, bei der die Gehäuserückseite 13 an Hutschiene 12 anliegt.

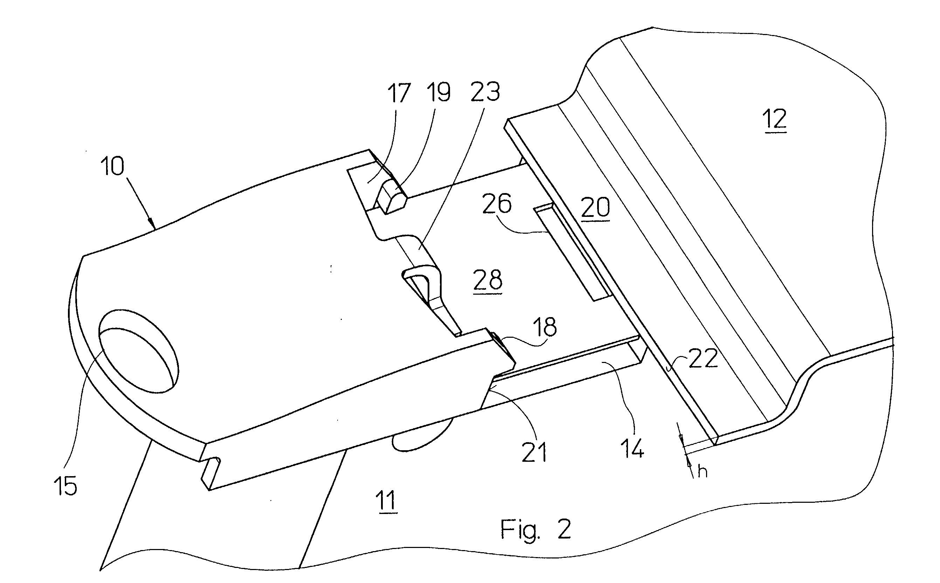

Das Befestigungselement 10 ist als Schnappschieber ausgebildet und zwischen der in Fig. 1 dargestellten Befestigungsstellung und der in Fig. 2 dargestellten Ansetz- bzw. Entnahmestellung verschiebbar an einer Führung 14 angeordnet, die an der Gehäuserückseite 13 seitlich gebildet ist. Der Schnappschieber 10 lässt sich auch in der Befestigungsstellung ansetzen und verrasten, wie nachfolgend noch näher erläutert wird.

Der Schnappschieber 10 besteht aus einem flachen länglichen Gehäuse mit einer rückseitigen Betätigungsöffnung 15, die in der Befestigungsstellung gemäß Fig. 1 seitlich über die Gehäuserückseite 13 vorsteht und für den Eingriff eines Schraubenziehers oder dergleichen ausgebildet ist. In den Seitenabschnitten 16 und 17 sind nicht dargestellte Führungselemente vorgesehen, die in die Gehäuseführungen 14 eingreifen. An der der Betätigungsöffnung 15 gegenüberliegenden Seite des Schnappschiebers 10 sind in Verlängerung der Seitenflanken Halteanformungen 18 und 19 gebildet, die für das Übergreifen des Befestigungsabschnitts des Hutschienen vorgesehen sind. Die Halteanformung 18 und 19 sind leicht nach außen angeschrägt, um ein problemloses Ansetzen des Schnappschiebers 10 zu ermöglichen. Unterhalb der Halteanformungen 18 und 19 springt das Seitenprofil des Gehäuses 16 des Schnappschiebers 10 bis zu einer Anlagekante 21 zurück, an der die Hutschienenkante 22 in der Befestigungsstellung anliegt.

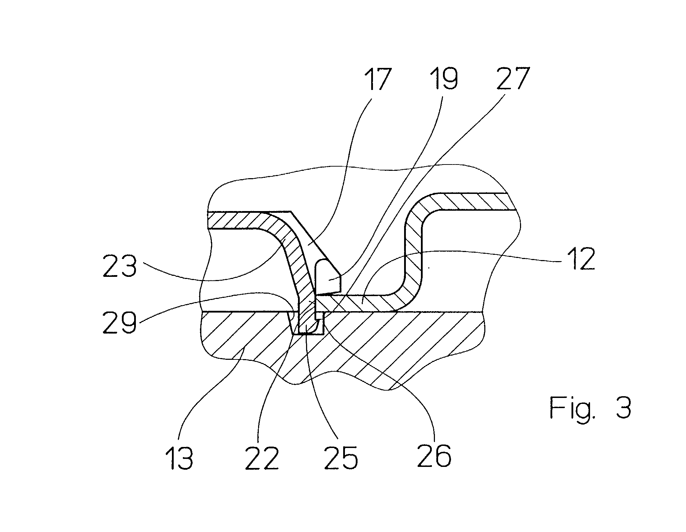

Mittig zwischen den beiden Halteanformungen 18 und 19, die sich jeweils von der Außenseite der Seitenabschnitte 16 und 17 zueinander erstrecken, ist eine elastische Rastanformung 23 angeformt, die sich aus der Oberseite 24 des Schiebergehäuses in einem Bogen nach unten erstreckt, wobei am Ende der elastischen Anformung 13 ein Halteprofil quer zu Bewegungsrichtung des Schiebers angeformt ist, das sich im Einrastzustand gemäß Fig. 1 und 3 in die gehäuseseitige nutförmige Rastaufnahme 26 zur Sicherung der Befestigungsstellung erstreckt. Am unteren Ende 25 des Rastprofils ist eine Rastnase 27 gebildet, die wie Fig. 3 andeutet, in der Befestigungsstellung unter die Hutschienenkante 22 greift und damit die Eingriffstellung des unteren Endes 25 in der Rastausnehmung 26 sichert.

Zur Befestigung eines Verteilereinbaugerätes an der Hutschiene 12 bestehen zwei Möglichkeiten. Nach der ersten Möglichkeit wird das Gerät zunächst rückseitig wie in Fig. 2 angesetzt. Anschließend wird der Schnappschieber 10 aus den in Fig. 2 gezeigten Stellung in dieser gemäß Fig. 1 verschoben, wobei die elastische Rastanformung 23 mit ihrem endseitigen Rastprofil 25 von einem nicht dargestellten Begrenzungsanschlag auf der rückseitigen Fläche 28 des Einbaugerätgehäuses 11 gleitet, bis es nach Erreichen der Befestigungsstellung gemäß Fig. 1 und 3 in die Rastausnehmung 26 unter der in der elastischen Rastanformung 23 herrschenden Vorspannung eintritt. Der Befestigungsbereich 20 des Profils 12 wird dann seitlich durch die Halteanformungen 18 und 19 übergriffen und liegt mittig zwischen diesen an der elastischen Rastanformung 23 sicher und zuverlässig an.

Nach der zweiten Möglichkeit wird das Verteilereinbaugerät mit dem sich bereits in der Befestigungsstellung gemäß Fig. 1 befindenden Schnappschieber 10 direkt an die Hutschiene 12 angesetzt, und der Schnappschieber 10 kann aufgrund der Elastizität der elastischen Rastanformung 23 soweit zurückgeschoben werden, dass die Kante bzw. der Befestigungsabschnitt 20 der Hutschiene 12 unter die Halteumformungen ??18??, 19 treten kann. Die Rastausnehmung 26 weist hierfür im Querschnitt eine größere Breite als das untere Ende 25 der Rastanformung 23 auf und ist entgegen der Ansetzrichtung erweiternd angeschrägt, wie bei 29 angedeutet.

## Patentansprüche

1. Vorrichtung zur lösbaren Schnellbefestigung eines Gehäuses (11) eines elektrischen Verteilereinbaugerätes an einer Hutschiene (12), bestehend aus, einem Befestigungselement (10), das an der Gehäuserückseite (13) zwischen einer Ansetz- bzw. Entnahmestellung und einer an der Hutschiene (12) vorgesehenen Befestigungsstellung verschiebbar ist,
wobei das Befestigungselement (10) Halteanformungen (18, 19) für das Übergreifen eines Befestigungsabschnitts (20) der Hutschiene (12) und wenigstens eine elastische Rastanformung (23, 25) für die Sicherung der Befestigungsstellung aufweist.

2. Vorrichtung nach Anspruch 1, **dadurch gekennzeichnet, dass** für jede elastische Rastanformung (23, 25) eine Rastausnehmung (26) in dem Bereich zwischen Ansetzstellung und Befestigungsstellung des Befestigungselements (10) vorgesehen ist.

3. Vorrichtung nach Anspruch 1 oder 2, **dadurch gekennzeichnet, dass** die elastische Rastanformung (23) an ihrem freien Ende eine Rastnase (27) aufweist, die zur Hutschienenkante (22) gerichtet und für das Eintreten in die Rastausnehmung (26) vorgesehen ist.

4. Vorrichtung nach Anspruch 3, **dadurch gekennzeichnet, dass** die Rastnase (27) im Querschnitt breiter als das Ende (25) der Rastanformung (23) ist, wobei sich der Querschnitt an eine Rückseite nach oben angeschrägt erweitert.

5. Vorrichtung nach einem der vorangehenden Ansprüche, **dadurch gekennzeichnet, dass** die elastische Rastanformung (23) senkrecht zu einer Führungsebene für das Befestigungselement (10) abgewinkelt und für den Eingriff in eine komplementäre Rastausnehmung (26) am Gehäuse (11, 28) vorgesehen ist.

6. Vorrichtung nach einem der vorangehenden Ansprüche, **dadurch gekennzeichnet, dass** die elastische Rastanformung (23) mittig zwischen zwei Halteanformungen (18, 19) angeordnet ist.

7. Vorrichtung nach einem der vorangehenden Ansprüche, **dadurch gekennzeichnet, dass** das Befestigungselement (10) als Schnappschieber ausgebildet ist, der an einer gehäuseseitigen Führung (14) gelagert ist.

8. Vorrichtung nach Anspruch 1 oder 2, **dadurch gekennzeichnet, dass** elastische Rastanformungen im Bereich von gehäuseseitigen Führungen (14) des als Schieber ausgebildeten Befestigungselements (10) zum Eingriff in dort angeordnete komplementäre Rastausnehmungen vorgesehen sind.

9. Vorrichtung nach einem der vorangehenden Ansprüche, **dadurch gekennzeichnet, dass** die Halteanformungen (18, 19) an dem Befestigungselement (10) seitlich angeordnet sind.

10. Vorrichtung nach einem der vorrangehenden Ansprüche, **dadurch gekennzeichnet, dass** die Halteanformungen (18, 19) für das Übergreifen des Befestigungsabschnitts (20) am Hutprofil (12) nach außen angeschrägt sind.
